(19) Europäisches Patentamt
European Patent Office
Office européen des brevets

(11) Veröffentlichungsnummer: **0 011 248**
**A1**

(12) **EUROPÄISCHE PATENTANMELDUNG**

(21) Anmeldenummer: 79104397.9

(22) Anmeldetag: 08.11.79

(51) Int. Cl.³: **C 23 C 17/00**
**B 22 F 7/00**

(30) Priorität: 11.11.78 DE 2848997

(43) Veröffentlichungstag der Anmeldung:
28.05.80 Patentblatt 80/11

(84) Benannte Vertragsstaaten:
AT BE CH FR GB IT LU NL SE

(71) Anmelder: Eickhorn, geb. Fischer, Annette
Margaretenstrasse 38-44
D-5650 Solingen 1(DE)

(72) Erfinder: Eickhorn, Rolf-Jürgen, Dipl.-Ing.
Margaretenstrasse 38-44
D-5650 Solingen(DE)

(74) Vertreter: Gille, Christian, Dipl.-Ing. et al,
Redies , Redies, Türk & Gille Bruckner Strasse 20
D-4000 Düsseldorf 13(DE)

(54) **Verfahren zum Verstärken von aus Metall bestehenden Verschleissteilen und nach diesem Verfahren hergestellte Verschleissteile.**

(57) Zum Verstärken von aus Metall bestehenden Verschleißteilen (1) wird auf die vorher erwärmten, zu verstärkenden Flächenbereiche feinkörniges Metall oder Metallkarbid mit einem seine Partikel zusammenhaltenden Bindemittel aufgetragen und anschließend auf den so beschichteten Flächenbereichen durch Wärmeeinwirkung festgeschweißt. Als Bindemittel kann ein wachsartiges Bindemittel verwendet werden.

In einfacher Weise wird das Metall oder Metallkarbid mittels einer die Form der zu verstärkenden Flächenbereiche aufweisenden Stange aufgebracht, die entsprechend der aufzutragenden Menge Metall oder Metallkarbid eine bestimmte Zeitdauer und mit einem bestimmten Druck gegen die vorher erwärmten Flächenbereiche gedrückt wird. Nach dem Auftragen des Metalles oder Metallkarbides auf einen ebenen Zuschnitt (1) und dem Festschweißen wird das Werkstück in seine gewünschte Form gebracht.

FIG. 1

EP 0 011 248 A1

- 1 -

G 52 027

Verfahren zum Verstärken von aus Metall bestehenden

Verschleißteilen

Die Erfindung betrifft ein zum Verstärken von aus Metall bestehenden Verschleißteilen bestimmtes Verfahren, bei dem auf die zu verstärkenden Flächenbereiche mit einem Trägermaterial feinkörniges Metall oder Metallkarbid aufgetragen und anschließend auf den so beschichteten Flächenbereichen durch Wärmeeinwirkung befestigt, insbesondere festgeschweißt wird.

Es ist bekannt, aus Metall wie normalem Stahl bestehende Bauteile wie beispielsweise an Erdbaggern eingesetzte Messer dadurch verschleißfester zu machen, daß man die besonders beanspruchten Flächenbereiche mit einer Aufpanzerung aus Hartmetall wie beispielsweise hochverschleißfestes Titan-Wolframkarbid versieht. Die zur Aufpanzerung verwendeten Metalle werden dabei in einem Pulvergemisch, das aus einer Matrix und den Hartmetallen bzw. Hartmetallkarbiden besteht, auf die zu verstärkenden Flächen der fertig geformten Werkstücke aufgetragen, woraufhin man auf diese Pulverschicht Flammen einwirken läßt, um aus den feinen Metallpartikeln eine die Aufpanzerung bildende und mit dem Werkstück innig und dauerhaft verbundene ununterbrochene Beschichtung zu erzeugen.

Obwohl man auf diese Art und Weise die Verschleißfestigkeit von stark beanspruchten Teilen sehr deutlich erhöhen kann, ist das bekannte Verfahren recht kostspielig und zeitaufwendig, so daß es für größere Serien, die preiswert hergestellt werden sollen, kaum in Frage kommt. Obwohl die zum Aufpanzern verwendeten Pulvergemische sehr kostspielig sind, ist mit einem Verlust von 20 bis 50% zu rechnen, weil beim Aufstreuen des Pulvers auf die zu verstärkenden Flächenbereiche ebenso Material verschüttet oder sonstwie verloren geht, wie beim anschließenden Einwirken der Flammen. Das bekannte "Flammspritzen" läßt sich im übrigen kaum mechanisieren und ist dementsprechend mit viel kostspieliger Handarbeit verbunden. Hinzu kommt, daß die Aufpanzerung an den Rändern aufgrund verspritzender Pulverteilchen unsauber wird. Besonders wenn unebene Flächen auf diese Weise aufgepanzert werden müssen, ist der Arbeitsaufwand und Materialverlust sehr groß.

Der Erfindung liegt die Aufgabe zugrunde, das Aufpanzern von starken Verschleißbeanspruchungen ausgesetzten Flächenbereichen metallischer Bauteile derart zu verbessern, daß die Materialverluste des Aufpanzerungsmetalles drastisch gesenkt werden können und das Aufpanzern vollautomatisch vorgenommen werden kann.

Diese Aufgabe wird erfindungsgemäß bei einem Verfahren der eingangs genannten Gattung dadurch gelöst, daß das feinkörnige Metall in einem seine Partikel zusammenhaltenden Bindemittel auf vorher erwärmte zu verstärkende Flächenbereiche aufgetragen wird. Das erfindungsgemäße Verfahren unterscheidet sich vom bekannten Stand der Technik also im wesentlichen dadurch, daß die die Aufpanzerung bildenden Metalle nicht in Pulverform, sondern mit einem Bindemittel aufgetragen werden und schon vor dem Einwirken der Flammen an der zu verstärkenden Fläche haften, was wegen der vor-

herigen Begrenzung der zu verstärkenden Flächenbereiche gewährleistet ist. Auf diese Weise ergeben sich keine Verluste des Aufpanzerungsmaterials durch Verstreuen. Auch lassen sich die aufzupanzernden Flächenbereiche genau begrenzen, wenn man das aufzutragende Metall mit dem Bindemittel und sonstigem Trägermaterial zu einer Stange oder einem Stempel mit einer der zu verstärkenden Flächenbereiche entsprechenden Stirnfläche formt und diesen Stempel taktweise absenkt und dabei auf unter ihm durchlaufende vorerwärmte Werkstücke aufdrückt.

Da das aufzupanzernde Metall auf der zu verstärkenden Oberfläche nicht verrutschen kann, ist es auch möglich, die Aufpanzerung in einem Arbeitsgang an mehreren in unterschiedlicher Anordnung befindlichen Flächen anzubringen, beispielsweise Arbeitskanten von Messern, Sägen, Fräsern oder dergleichen, auch über Eck, oder an einander entgegengesetzten Flächen mit einer Aufpanzerung zu versehen.

Vorzugsweise wird als Bindemittel ein wachsartiges Bindemittel verwendet, das eine besonders gute Haftung auf den zu verstärkenden Flächenbereichen gewährleistet. Als wachsartiges Material kommt Stearat oder auch "Mikropulver" in Betracht.

Die Schichtdicke der Aufpanzerung läßt sich durch den Grad der Erwärmung der zu beschichtenden Flächenbereiche, den Druck und die Zeitdauer des Kontaktes mit dem aus Bindemittel und Metall bestehenden Block, der Stange oder dem Stempel bestimmen. Da der Block oder Stempel das pulverförmig zerkleinerte Aufpanzerungsmetall in sehr viel dichterer Anordnung als beim Aufstreuen eines lockeren Pulvers enthält, erzielt man mit dem erfindungsgemäßen Verfahren auch dickere und gleichmäßigere Aufpanzerungsschichten.

Nach einem weiteren Merkmal der Erfindung wird das im Bindemittel gebundene Metall auf ebene Flächenbereiche aufgebracht und auch auf ebenen Flächenbereichen festgeschweißt, woraufhin man erst das Werkstück in seine gewünschte Form bringt. Diese Arbeitsweise ist besonders vorteilhaft für aus Platten geformte Werkstücke wie beispielsweise Messer für Erdaushubarbeiten, weil das Aufpanzern auf diese Weise weitgehend mechanisiert werden kann. Die zum Festschweißen der Hartmetalle verwandeten Flammen bestreichen eine ebene Fläche wesentlich gleichförmiger als eine geformte Fläche. Dadurch wird im kontinuierlichen Durchlauf eine gleichförmige Aufpanzerung erzielt, die beim anschließenden Formen wie beispielsweise Biegen der beschichteten Bereiche nicht beschädigt oder von der Unterlage abgelöst wird.

Durch die Erfindung wird die Möglichkeit geschaffen, Verschleißteile wie beispielsweise aus Stahl oder Werkzeugstahl bestehende Werkzeuge oder sonstige Verschleißteile an den einem besonderen Verschleiß ausgesetzten Stellen mit verschleißfesteren Metallen wie beispielsweise Hartmetallen oder Metallkarbiden preiswert und weitgehend voll mechanisierbar schnell mit einer Aufpanzerung zu versehen.

In der Zeichnung ist zur weiteren Erläuterung der Erfindung lediglich als ein Ausführungsbeispiel ein für einen Erdbagger bestimmtes Messer dargestellt, das mit einer erfindungsgemäß aufgebrachten Aufpanzerung versehen ist, und zwar zeigt

Fig. 1   eine Draufsicht auf einen flachen plattförmigen Zuschnitt, aus dem das Messer geformt wird, wobei der an die Arbeitskante des Messers anschließende Flächenbereich mit einer Aufpanzerung aus Hartmetall versehen ist.

Fig. 2    eine Seitenansicht des aus dem Zuschnitt gemäß

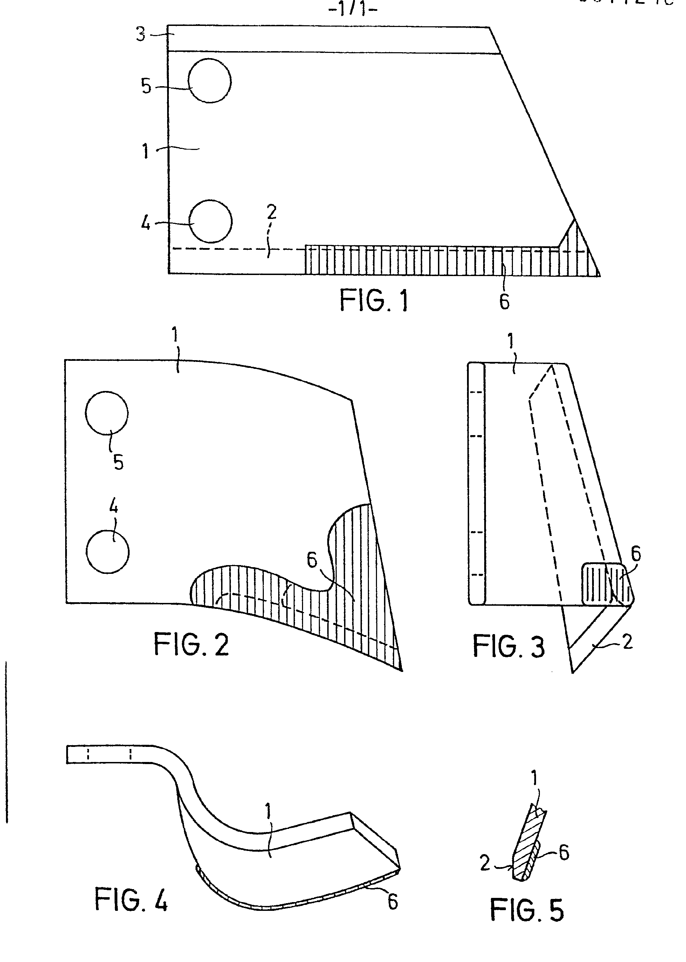

          Fig. 1 gebogenen Messers,

Fig. 3    eine Ansicht des Messers aus Fig. 2 von
          hinten,

Fig. 4    eine Ansicht des Messers aus Fig. 2 von oben
          und

Fig. 5    einen Teilschnitt durch das Messer im Bereich
          der mit einer Aufpanzerung verschleißfest ge-
          machten Schneidkante.

In Fig. 1 ist ein aus einer ebenen Metallplatte gebildeter Zuschnitt 1 dargestellt, aus dem ein Messer
für einen Erdbagger geformt werden soll. Dieser Zuschnitt hat an der oberen und der unteren Kante/ab-
geschrägte Fase 2 und 3 und enthält Bohrungen 4 und 5,
die zum Anbringen des fertigen Messers an einem nicht
dargestellten Träger dienen. Auf der der unteren
Fase 2 gegenüberliegenden Seite ist der Zuschnitt 1
mit einer Verstärkungsschicht 6 aus Hartmetall versehen, die exakt begrenzt ist und dadurch hergestellt
wurde, daß zunächst ein aus feinstteiligem Hartmetall
und Bindemittel bestehender Stempel mit einer der zu
verstärkenden Fläche entsprechenden Stirnseite auf
den flachen Zuschnitt 1 aufgedrückt wurde, nachdem
der Zuschnitt auf eine Temperatur erwärmt worden ist,
bei der das Bindemittel des Stempels am Zuschnitt 1
ausreichend festklebt, woraufhin der Stempel zurückgezogen wurde und mittels einer oder mehrerer offener
Flammen das am Zuschnitt 1 haften gebliebene Material
derart behandelt wurde, daß die Metallpartikel eine
ununterbrochene gleichförmig dicke Schicht bilden,
die auf der Oberfläche des Zuschnittes 1 haftet,
während das Bindemittel und sonstige Trägermaterialien

verbrennen und/oder verdunsten. Die Beschichtung 6 ist besonders gut aus Fig. 5 zu erkennen.

Nachdem der Zuschnitt 1 in der vorstehend beschriebenen Weise fertiggestellt worden ist, wird er in die aus Fig. 2 bis 4 erkennbare Form gebogen. Das Messer ist nun fertig für den praktischen Einsatz.

G/uh

Patentansprüche:

1. Verfahren zum Verstärken von aus Metall bestehenden Verschleißteilen, bei dem auf die zu verstärkenden Flächenbereiche mit einem Trägermaterial feinkörniges Metall oder Metallkarbid aufgetragen und anschließend auf den so beschichteten Flächenbereichen durch Wärmeeinwirkung festgeschweißt wird, d a d u r c h g e k e n n z e i c h n e t, daß das feinkörnige Metall oder Metallkarbid in einem seine Partikel zusammenhaltenden Bindemittel auf vorher erwärmte zu verstärkende Flächenbereiche aufgetragen wird.

2. Verfahren nach Anspruch 1, dadurch gekennzeichnet, daß als Bindemittel ein wachsartiges Bindemittel verwendet wird.

3. Verfahren nach Anspruch 1 oder 2, dadurch gekennzeichnet, daß das Metall oder Metallkarbid mittels einer die Form der zu verstärkenden Flächenbereiche aufweisenden Stange aufgebracht wird, die entsprechend der aufzutragenden Menge Metall oder Metallkarbid eine bestimmte Zeitdauer und mit einem bestimmten Druck gegen die vorher erwärmten Flächenbereiche gedrückt wird.

4. Verfahren nach einem der Ansprüche 1 bis 3, dadurch gekennzeichnet, daß das Metall oder Metallkarbid auf ebene Flächenbereiche aufgebracht und festgeschweißt wird und daß das Werkstück danach in seine gewünschte Form gebracht wird.

5. Verschleißteil aus Metall, mit mittels feinkörnigem Metall oder Metallkarbid verstärkten Flächenbereichen, hergestellt nach dem Verfahren

0011248

aus einem der Ansprüche 1 bis 4, dadurch gekennzeichnet, daß das feinkörnige Metall oder Metallkarbid in einem seine Partikel zusammenhaltenden Bindemittel auf dem Verschleißteil festgeschweißt ist.

G/uh

0011248

FIG. 1

FIG. 2

FIG. 3

FIG. 4

FIG. 5

**Europäisches Patentamt**

**EUROPÄISCHER RECHERCHENBERICHT**

0011248

Nummer der Anmeldung

EP 79 10 4397

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - E - 60 904 (P. MOURA VIEFF et al.) <br><br> * Zusammenfassung 1; Seite 1, rechte Spalte, Zeilen 15-31 * | 1,2,5 |
| | -- | |
| | DE - C - 972 437 (DEAG) <br><br> * Anspruch 6; Seite 2, Zeilen 72-76,94-107 * | 1-3 |
| | -- | |
| | US - A - 3 056 693 (H.J. WOOCK) <br><br> * Anspruch 2 * | 1,2,5 |
| | -- | |
| | DE - A - 2 151 603 (W.C. HERAEUS) <br><br> * Anspruch 2; Seite 9, Zeilen 20-23 * | 4 |
| | ---- | |

**KLASSIFIKATION DER ANMELDUNG (Int.Cl. 3)**

C 23 C 17/00
B 22 F 7/00

**RECHERCHIERTE SACHGEBIETE (Int. Cl. 3)**

C 23 C
B 22 F 7/00
7/04
7/08

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-02-1980 | SCHRUERS |

EPA form 1503.1 06.78